# EUROPEAN PATENT SPECIFICATION

(11) **EP 1 241 117 B1**
(45) Date of publication and mention of the grant of the patent: **30.03.2005**
(21) Application number: 02251324.6
(22) Date of filing: 26.02.2002
(51) Int. Cl.: B65G 17/08, B65G 17/38

(54) **Enclosure member**
Abschlussteil
Membre d'obturation

(30) Priority: 14.03.2001 GB 0106190
(43) Date of publication of application: 18.09.2002
(73) Proprietor: Pennine Industrial Equipment Limited, Skelmanthorpe, Huddersfield HD8 9DT (GB)
(72) Inventor: Marshall, Christopher, Huddersfield HD9 1AH (GB)
(74) Representative: Stuttard, Garry Philip

(56) References cited:
- EP-A- 1 043 248
- AU-A- 1 978 776
- DE-A- 2 045 899
- US-A- 4 159 763
- US-A- 4 220 052

## Description

The present invention relates to a multi-link conveyor chain which may be used (for example) in the glass industry, in particular to an enclosure member for protecting the integrity of the multi-link conveyor chain during use and to a method for manufacturing the multi-link conveyor chain incorporating said enclosure member.

Multi-link conveyor chains are in widespread use in the glass industry for transporting glass products between processing stations. For example, a multi-link conveyor chain which is typically 100 feet long may be used to transport blown glass from a blowing station to an annealing station. In the conventional multi-link conveyor chain, there are a plurality of parallel spaced apart elongate pins having an oval-shaped cross-section. Mounted on adjacent elongate pins are a series of link plates spaced apart along the pin by a plurality of washers, each link plate comprising a first and a second link. Each of the first and second link is capable of engaging a drive sprocket and has an oval-shaped aperture for receiving the elongate pin. The washer is typically a circular plate with a central circular aperture for receiving the pin. The primary function of the washer is to act as a spacer which permits heat to be blown through the multi-link conveyor chain to maintain the temperature of transported hot glass articles. The multi-link conveyor chain is driven by the engagement of the links of the link plate with the multiple teeth of a drive sprocket during a cycle of engagement.

The conventional multi-link conveyor chain is assembled so that each end of the elongate pin extends beyond the outermost link plate (*ie* beyond the edge of the flat conveyor surface) and a pin head is fixed in a conventional manner to each exposed end. A disadvantage of this arrangement is that unless the guide strip adjacent to the multi-link conveyor chain is in perfect alignment with the edge of the multi-link conveyor chain, there is a tendency for the pin head to wear and eventually shear off so that the elongate pin may become dislodged. In extreme cases, this results in total collapse of the multi-link conveyor chain.

EP 1 043 248 A shows a known multi-link conveyor chain.

The present invention seeks to improve multi-link conveyor chains by enclosing one or both ends of an elongate pin in a protective enclosure member (*eg* a head protector). Moreover, the manufacture of such a multi-link conveyor chain enclosing both ends of an elongate pin in an enclosure member leads to particular difficulties which may be overcome in accordance with the present invention.

Thus viewed from one aspect the present invention provides a multi-link conveyor chain as defined by claim 1.

In a preferred embodiment, the second end of each elongate pin extends beyond a second edge of the substantially flat horizontal surface and the multi-link conveyor chain further comprises:
a second enclosure member positioned at the second edge of the substantially flat horizontal surface comprising:
   a main body having a substantially trapezoidal section and defining a first non-circular aperture and a second non-circular aperture, wherein the shape of the first and second non-circular aperture essentially matches the non-circular section of the first elongate pin and second elongate pin respectively and the depth of the first and second non-circular aperture is sufficient to enclose the second end of the first elongate pin and of the second elongate pin respectively; and
means for retaining the second end of the first elongate pin and the second elongate pin in the first and second non-circular aperture respectively.

Generally speaking, the first and second enclosure member will be identical.

By enclosing the first end of the elongate pin in a first enclosure member (and preferably the second end in a second enclosure member), the integrity of the multi-link conveyor chain is advantageously protected. In other words, the tendency for a pin head exposed beyond the edge of the conveyor surface to be sheared off is eliminated.

In a particularly preferred embodiment, the multi-link conveyor chain comprises: a plurality of enclosure members as hereinbefore defined positioned at the first and second edges of the substantially flat horizontal surface so as to enclose the first and second end of each of the plurality of elongate members.

In a preferred embodiment, the substantially trapezoidal section of the first enclosure member has a first side substantially parallel to a second side, wherein the second side is longer than the first side and has rounded corners. Preferably the first side has rounded corners (typically to a lesser extent than the second side). In use, the first enclosure member is positioned at the first edge with the second side uppermost.

The enclosure member may be sized and configured so as to have a maximum radial extent which is equal to or less than adjacent link plates. This ensures that the enclosure member does not interfere with the substantially flat horizontal surface.

In a preferred embodiment, the main body of each of the first and the second link of a link plate defines a non-circular aperture whose shape non-identically matches the non-circular section of the elongate pin. The non-identical match between the non-circular section of the elongate pin and the shape of the non-circular aperture defined by the main body of the link causes the link plate to be advantageously driven by the elongate pin throughout the cycle of engagement with the drive sprocket.

Preferably the multi-link conveyor comprises: a plurality of elongate pins spaced apart in substantially parallel relationship including a first elongate pin adjacent to a second elongate pin which is adjacent to a third elongate pin, each of said elongate pins having a first end, a second end and a non-circular section, wherein a plurality of link plates are consecutively mounted in a staggered fashion along the first, second and third elongate pin.

In a preferred embodiment, the circumferentially dependent sprocket engaging member of each of the first and second link of the link plate is substantially flat edged. Preferably each of the first and second link of the link plate has a flat-edged, substantially teardrop profile.

Link plates may be mounted consecutively along an elongate pin and spaced apart by one or more washers. The main body of the or each washer may define a circular or non-circular aperture. In a preferred embodiment of the invention, each washer comprises a main body defining a non-circular aperture for receiving the elongate pin whose shape essentially matches the non-circular section of the elongate pin. The essential match between the non-circular section of the elongate pin and the shape of the non-circular aperture defined by the main body of the washer renders the washer advantageously stationary throughout the cycle of engagement with the drive sprocket.

In a particularly preferred embodiment, each washer comprises a main body defining a non-circular aperture for receiving the elongate pin whose shape essentially matches the non-circular section of the elongate pin and the main body of each of the first and the second link of the link plate defines a non-circular aperture whose shape non-identically matches the non-circular section of the elongate pin whereby relative articulation between the washer and the link plate is thought to be responsible for an advantageous self cleaning effect.

In a particularly preferred embodiment, the non-circular aperture defined by the main body of the washer is an identical match (*ie* in shape and size) to the non-circular section of the elongate pin. This has the added advantage that debris is largely prevented from reaching the non-circular aperture defined by the link plate thereby preventing added wear between the aperture and the elongate pin.

Preferably the non-circular section of the elongate pin is substantially elliptical (or oval). Preferably the non-circular aperture defined by the main body of the (or each) link is substantially elliptical (or oval) with an enlarged side portion. Particularly preferably the enlarged side portion extends inwardly towards the connecting portion.

Preferably the non-circular aperture of the washer is substantially elliptical (or oval).

In a preferred embodiment, each washer comprises: a substantially circular main body having one or more circumferential irregularities.

Advantageously, each circumferential irregularity extends away from the circumference to a sharp axial edge. A sharp axial edge has the advantage that it cuts into (and therefore breaks up) debris whereas a worn or radiussed edge simply rubs (and therefore accumulates) debris.

Preferably, each circumferential irregularity is a substantially triangular extension.

In a preferred embodiment, the washer has a plurality of circumferential irregularities. For example, the washer has three or more circumferential irregularities, preferably five or more circumferential irregularities, particularly preferably seven or more circumferential irregularities and especially preferably about ten circumferential irregularities.

The substantially circular main body of the washer having one or more circumferential irregularities may adopt any convenient non-circular profile such as a polygonal profile (*eg* triangular, square, etc) or a non-polygonal profile. Typically the non-circular profile is axially symmetrical.

A polygonal profile may comprise a multi-sided polygon with a triangular extension on one or more (preferably all) of the sides. Preferred is a polygonal profile comprising a decagon with triangular extensions on each side.

The washer is sized and configured so as to have a maximum radial extent which is less than adjacent links. This ensures that the washer does not interfere with engagement and disengagement of links with the drive sprocket during the cycle of engagement.

In a preferred embodiment of the invention, each washer is made from a heat treatable alloy steel which has a working temperature in excess of 350°C. In the glass industry, this has the added advantage that conveyor chains (which might typically reach 350°C) will undergo no loss of hardness and sharp axial edges will not be worn. An additional advantage of this material is that the difference in hardness between the washer and an adjacent link is sufficient to reduce any pre-disposition to "cold welding" (*ie* welding of an adjacent washer and link).

It is not intended that the present invention be limited to use in the glass industry. It is expected that the multi-link conveyor chain of the invention will be suitable in any industry which desires transportation between a first and a second station. For example, the multi-link conveyor chain of the invention could be used to transport automotive parts in the automotive industry.

Viewed from a further aspect the present invention provides an enclosure member as hereinbefore defined.

The enclosure member may be fitted to any type of multi-link conveyor chain, in particular those available from Pennine Industrial Equipment Limited (Huddersfield, England) such as their PREMIUM range. It may be fitted to multi-link conveyor chains of ½ inch or 1 inch pitch being link only or link/washer assemblies of centre guide, side guide or multi-guide type. In each case, it is preferred to fit first and second enclosure members at each end of an adjacent pair of elongate pins.

Viewed from a yet further aspect the present invention provides a method for manufacturing a multi-link conveyor chain as hereinbefore defined comprising the method as defined in claim 28, the method steps being:
(A) securing a first pin head to the first end of an elongate pin;
(B) inserting the second end of the elongate pin into the first non-circular aperture defined by the main body of the first enclosure member;
(C) inserting the second end of the elongate pin into the non-circular aperture defined by the first or second link of each of a plurality of link plates to a position where the first pin head is enclosed within the first non-circular aperture defined by the main body of the first enclosure member; and
(D) securing a second pin head to the second end of the elongate pin.

Steps (A) and (D) are typically carried out by spin rivetting. Materials suitable for spin rivetting are familiar to those skilled in the art (*eg* carbide). Typically, the pin head is oval-shaped.

Particularly preferably, in step (C) the second end of the elongate pin is inserted to a position where the first pin head is seated in a counterbore in the first non-circular aperture.

Whilst it is relatively straightforward to enclose the first end of an elongate pin in the first enclosure member and thereafter to secure a second pin head to a free second end of the elongate pin using the method of the invention, it is less straightforward to secure a second pin head to the second end of the elongate pin when the second end is fitted with a second enclosure member. This is due to the space constraints imposed on the second pin head by the non-circular aperture in the second enclosure member.

In step (C) the elongate pin is inserted to a position where the first pin head is seated in a counterbore in the first non-circular aperture of the first enclosure member, said method further comprising:
(E) inserting the second end of the elongate pin into the first non-circular aperture defined by the main body of the second enclosure member to a position where the second end is enclosed within the first non-circular aperture; and
(F) eccentrically spin rivetting a piece of material (*eg* carbide) onto the second end of the elongate pin to produce a second pin head.

Preferably, in step (E) the elongate pin is inserted to a position in which the second end is adjacent a counterbore. In this embodiment, step (F) produces a second pin head seated in the counterbore.

Preferably, the piece of material in step (F) is greater in diameter than the desired diameter of the second pin head. Typically the second pin head is oval and the desired diameter is the length of the major axis. By way of example, where the desired diameter is between 6.0 and 6.3mm and the counterbore is of 6.5mm diameter, a piece of carbide of diameter 6.3mm is spin rivetted at an eccentricity of about 0.05mm to produce a second pin head seated in the counterbore.

The present invention will now be described in a non-limitative sense with reference to the accompanying Figures in which:
Figure 1 illustrates an embodiment of the enclosure member of the invention; and
Figure 2 illustrates an embodiment of the multi-link conveyor assembly of the invention.

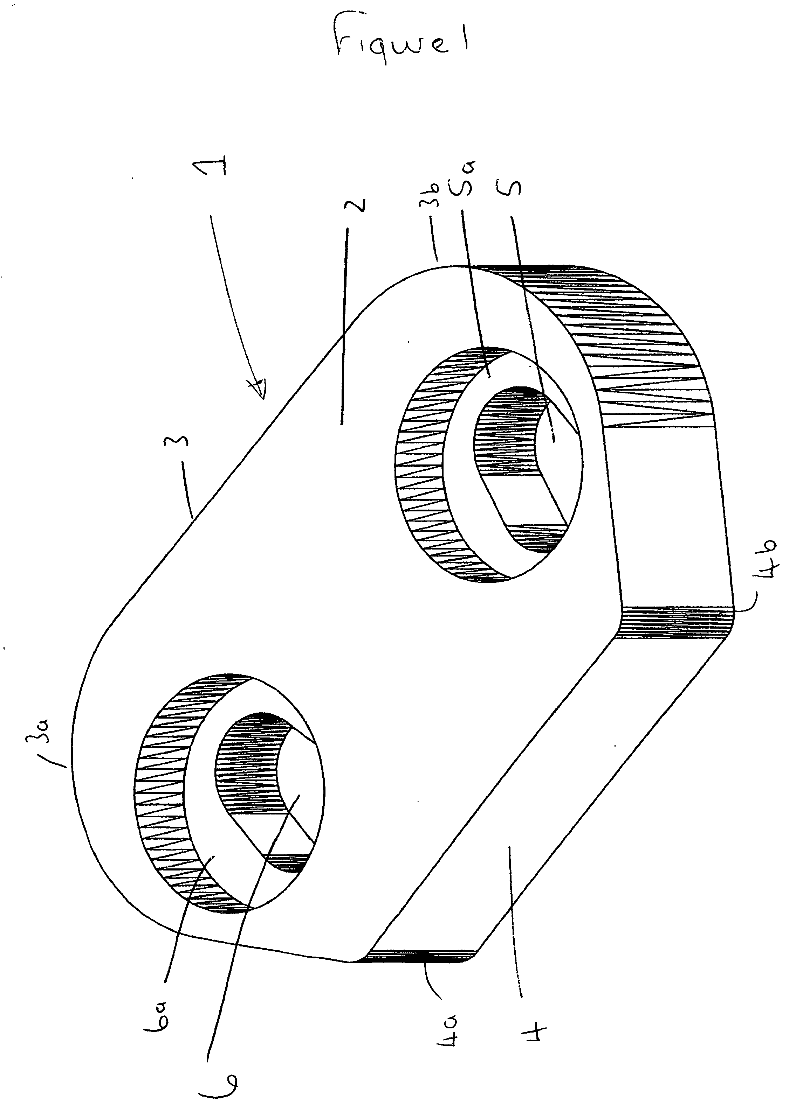

Figure 1 illustrates an embodiment of the enclosure member of the invention designated generally by reference numeral 1. The enclosure member 1 comprises a trapezoidal main body 2 having a long side 3 parallel to a short side 4. The corners 3a and 3b of the long side 3 are rounded off (and to a lesser extent so are the corners 4a and 4b of the short side 4). The main body 2 defines a first non-circular aperture 5 and a second non-circular aperture 6, each of which are elliptical and provided with a cylindrical counterbore 5a and 6a respectively.

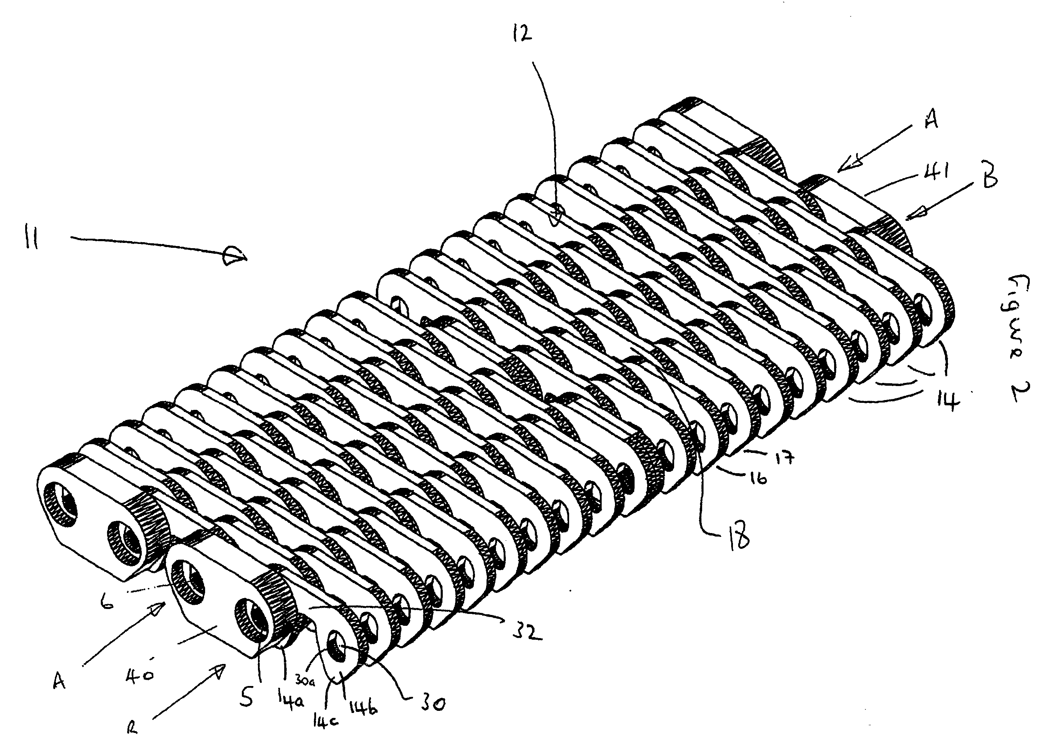

Figure 2 illustrates in partial view an embodiment of the multi-link conveyor chain of the invention designated generally by reference numeral 11. For the sake of clarity, the elongate pins and washers are omitted from Figure 2 (nevertheless it will be readily apparent how and where these are used).

The multi-link conveyor chain 11 provides a flat surface 12 upon which may be carried articles such as glass bottles to a processing station. The multi-link conveyor chain 11 comprises a series of elongate pins of elliptical section upon which are mounted a number of link plates 14. Each pair of consecutive link plates (16 and 17 for example) is spaced apart along an elongate pin by a washer. Link plates (16, 17 and 18 for example) are mounted consecutively in a staggered fashion along a first, second and third elongate pin.

Each of the plurality of link plates 14 has twin links 14a, 14b having a substantially teardrop profile which extends into a flat-edged, sprocket engaging tooth 14c. Each link 14a, 14b is connected by a connecting portion 32. A non-circular aperture 30 in link 14a non-identically matches the elliptical section of an elongate pin. The aperture 30 is substantially elliptical with an enlarged side portion 30a extending inwardly towards connecting portion 32.

To assemble the multi-link conveyor chain of Figure 2, the first end of each of a pair of elongate pins of elliptical section is fitted with a first pin head (by spin rivetting). The second end of each of the pair of elongate pins is inserted into the first and second elliptical apertures 5 and 6 (respectively at positions A and B) of a first enclosure member 41 and through the plurality of link plates to a position in which the first pin heads are seated in the counterbores 5a and 6a respectively. The second end of each of the pair of elongate pins extends beyond the outermost link plate and is inserted into the first and second elliptical apertures 5 and 6 respectively of a second enclosure member 40. Each enclosure member 40 and 41 is as hereinbefore described with reference to Figure 1 (and the numbering where appropriate is retained). The second end of each of the pair of elongate pins is secured with a pin head seated in the counterbore 5a and 6a. This may be produced by eccentrically spin rivetting a piece of carbide as hereinbefore described to the second end of the elongate pin within the counterbore. In this manner, the ends of each elongate pin may be protected using first and second enclosure members.

## Claims

1. A multi-link conveyor chain (11) adapted to provide a substantially flat horizontal surface (12) driveable between a first and a second processing station by engagement with a drive sprocket, said multi-link conveyor chain comprising:
a plurality of elongate pins spaced apart in substantially parallel relationship including a first elongate pin adjacent to a second elongate pin, each of said elongate pins having a first end, a second end and a non-circular section, wherein the first end of each elongate pin extends beyond a first edge of the substantially flat horizontal surface;
a plurality of link plates (14) mounted on adjacent elongate pins having a first link (14a) connected to a second link (14b) by a connecting portion (32), each of the first and the second link having a substantially main body and a circumferentially dependent sprocket engaging member (14c), said main body defining a non-circular aperture (30) whose shape essentially matches the non-circular section of an elongate pin;
a first enclosure member (41) positioned at the first edge of the substantially flat horizontal surface comprising:
a main body (2) having a substantially trapezoidal section and defining a first non-circular aperture (5) and a second non-circular aperture (6), wherein the shape of the first and second non-circular aperture essentially matches the non-circular section of the first elongate pin and second elongate pin respectively and the depth of the first and second non-circular aperture is sufficient to enclose the first end of the first elongate pin and of the second elongate pin respectively; and
means for retaining the first end of the first elongate pin and of the second elongate pin in the first and second non-circular aperture respectively, wherein the means for retaining comprises:
a first pin head secured to the first end of the first elongate pin and a second pin head secured to the first end of the second elongate pin **characterised in that** the shape of the first and second non-circular aperture of the first enclosure member (41) essentially matches the non-circular section of the first elongate pin and second elongate pin respectively, and **in that** said first and second pin head are seated in a counterbore (5a, 6a) in the first and second non-circular aperture of the first enclosure member respectively, wherein the counterbore is non-tapered.

2. A multi-link conveyor chain as claimed in claim 1 wherein the second end of each elongate pin extends beyond a second edge of the substantially flat horizontal surface and the multi-link conveyor chain further comprises:
a second enclosure member (40) positioned at the second edge of the substantially flat horizontal surface comprising:
a main body having a substantially trapezoidal section and defining a first non-circular aperture and a second non-circular aperture, wherein the shape of the first and second non-circular aperture essentially matches the non-circular section of the first elongate pin and second elongate pin respectively and the depth of the first and second non-circular aperture is sufficient to enclose the second end of the first elongate pin and of the second elongate pin respectively; and
means for retaining the second end of the first elongate pin and of the second elongate pin in the first and second non-circular aperture respectively.

3. A multi-link conveyor chain as claimed in claim 1 or 2 wherein the first enclosure member and second enclosure member are identical.

4. A multi-link conveyor chain as claimed in any preceding claim comprising: a plurality of enclosure members as defined in claim 1 positioned at the first and second edges of the substantially flat horizontal surface so as to enclose the first and second end of each of the plurality of elongate members.

5. A multi-link conveyor chain as claimed in any preceding claim wherein the substantially trapezoidal section of the first enclosure member has a first side (4) substantially parallel to a second side (3), wherein the second side (3) is longer than the first side (4) and has rounded corners (3a,3b).

6. A multi-link conveyor chain as claimed in claim 5 wherein the first side (4) has rounded corners (4a,4b).

7. A multi-link conveyor chain as claimed in any preceding claim wherein the enclosure member is sized and configured so as to have a maximum radial extent which is equal to or less than adjacent link plates.

8. A multi-link conveyor chain as claimed in any preceding claim wherein the main body of each of the first (14a) and the second link (14b) of a link plate (14) defines a non-circular aperture (30) whose shape non-identically matches the non-circular section of the elongate pin.

9. A multi-link conveyor chain as claimed in any preceding claim comprising: a plurality of elongate pins spaced apart in substantially parallel relationship including a first elongate pin adjacent to a second elongate pin, wherein the second elongate pin is adjacent to a third elongate pin, each of said elongate pins having a first end, a second end and a non-circular section, wherein a plurality of link plates are consecutively mounted in a staggered fashion along the first, second and third elongate pin.

10. A multi-link conveyor chain as claimed in any preceding claim wherein the circumferentially dependent sprocket engaging member of each of the first and second link of the link plate is substantially flat-edged.

11. A multi-link conveyor chain as claimed in claim 10 wherein each of the first and second link of the link plate has a flat-edged, substantially teardrop profile.

12. A multi-link conveyor chain as claimed in any preceding claim wherein the non-circular section of the elongate pin is substantially elliptical.

13. A multi-link conveyor chain as claimed in any preceding claim wherein the non-circular aperture defined by the main body of the (or each) link is substantially elliptical or oval with an enlarged side portion.

14. A multi-link conveyor chain as claimed in claim 13 wherein the enlarged side portion extends inwardly towards the connecting portion.

15. A multi-link conveyor chain as claimed in any preceding claim wherein the link plates are mounted consecutively along an elongate pin and spaced apart by one or more washers.

16. A multi-link conveyor chain as claimed in claim 15 wherein each washer comprises a main body defining a non-circular aperture for receiving the elongate pin whose shape essentially matches the non-circular section of the elongate pin.

17. A multi-link conveyor chain as claimed in claim 16 wherein the main body of each of the first and the second link of the link plate defines a non-circular aperture whose shape non-identically matches the non-circular section of the elongate pin.

18. A multi-link conveyor chain as claimed in claim 16 or 17 wherein the non-circular aperture defined by the main body of the washer is an identical match to the non-circular section of the elongate pin.

19. A multi-link conveyor chain as claimed in any of claims 15 to 18 wherein the non-circular aperture of the washer is substantially elliptical or oval.

20. A multi-link conveyor chain as claimed in any of claims 15 to 19 wherein each washer comprises: a substantially circular main body having one or more circumferential irregularities.

21. A multi-link conveyor chain as claimed in claim 20 wherein each circumferential irregularity extends away from the circumference to a sharp axial edge.

22. A multi-link conveyor chain as claimed in either of claims 20 or 21 wherein each circumferential irregularity is a substantially triangular extension.

23. A multi-link conveyor chain as claimed in any of claims 20 to 22 wherein the washer has a plurality of circumferential irregularities.

24. A multi-link conveyor chain as claimed in any of claims 20 to 23 wherein the substantially circular main body of the washer having one or more circumferential irregularities adopts a non-circular profile.

25. A multi-link conveyor chain as claimed in claim 24 wherein the non-circular profile is a polygonal profile.

26. A multi-link conveyor chain as claimed in any of claims 15 to 25 wherein each washer is composed of a heat treatable alloy steel which has a working temperature in excess of 350°C.

27. An enclosure member as defined in any preceding claim.

28. A method for manufacturing a multi-link conveyor chain as defined in any of claims 1 to 26 comprising the steps of:
(A) securing a first pin head to the first end of an elongate pin;
(B) inserting the second end of the elongate pin into the first non-circular aperture defined by the main body of the first enclosure member;
(C) inserting the second end of the elongate pin into the non-circular aperture defined by the first or second link of each of a plurality of link plates to a position where the first pin head is seated in a counterbore in the first non-circular aperture;
(D) securing a second pin head to the second end of the elongate pin;
(E) inserting the second end of the elongate pin into the first non-circular aperture defined by the main body of the second enclosure member to a position where the second end is adjacent to a counterbore in the first non-circular aperture; and
(F) eccentrically spin rivetting a piece of material onto the second end of the elongate pin to produce a second pin head.

29. A method as claimed in claim 28 wherein steps (A) and (D) are carried out by spin rivetting.

30. A method as claimed in claim 28 wherein step (F) produces a second pin head seated in the counterbore.

## Patentansprüche

1. Mehrfachverbindungsförderkette (11), welche derart ausgestaltet ist, dass sie eine im Wesentlichen flache horizontale Oberfläche (12), welche zwischen einer ersten und einer zweiten Bearbeitungsstation durch Eingriff mit einem Kettenradantrieb antreibbar ist, bereitstellt, wobei die Mehrfachverbindungsförderkette umfasst:
eine Mehrzahl von länglichen Stiften, welche in einer im Wesentlichen parallelen Beziehung beabstandet sind, wobei ein erster länglicher Stift benachbart zu einem zweiten länglichen Stift ist, wobei jeder der länglichen Stifte ein erstes Ende, ein zweites Ende und einen nicht kreisförmigen Abschnitt aufweist, wobei sich das erste Ende von jedem länglichen Stift über eine erste Kante der im Wesentlichen flachen horizontalen Oberfläche erstreckt;
eine Mehrzahl von Verbindungsplatten (14), welche auf benachbarten länglichen Stiften angebracht sind, welche eine erste Verbindung (14a) aufweisen, welche durch einen Verbindungsabschnitt (32) mit einer zweiten Verbindung (14b) verbunden ist, wobei sowohl die erste als auch die zweite Verbindung einen wesentlichen Hauptkörper und ein am Umfang des Kettenrades anhängiges Eingriffsteil (14c) aufweisen, wobei der Hauptkörper eine nicht kreisförmige Öffnung (30) definiert, deren Form im Wesentlichen mit dem nicht kreisförmigen Abschnitt eines länglichen Stiftes übereinstimmt; ein erstes Abschlussteil (41), welches an der erste Kante der im Wesentlichen flachen horizontalen Oberfläche angeordnet ist, umfassend:
einen Hauptkörper (2), welcher einen im Wesentlichen trapezförmigen Abschnitt aufweist und eine erste nicht kreisförmige Öffnung (5) und eine zweite nicht kreisförmige Öffnung (6) definiert, wobei die Form der ersten und der zweiten nicht kreisförmigen Öffnung im Wesentlichen mit dem nicht kreisförmigen Abschnitt des ersten länglichen Stiftes beziehungsweise des zweiten länglichen Stiftes übereinstimmt und die Tiefe der ersten und der zweiten nicht kreisförmigen Öffnung ausreichend ist, um das erste Ende des ersten länglichen Stiftes beziehungsweise des zweiten länglichen Stiftes zu umschließen; und
Mittel zum Zurückhalten des ersten Endes des ersten länglichen Stiftes und des zweiten länglichen Stiftes in der ersten beziehungsweise zweiten nicht kreisförmigen Öffnung, wobei das Mittel zum Zurückhalten umfasst:
einen ersten Stiftkopf, welcher an dem ersten Ende des ersten länglichen Stiftes befestigt ist, und einen zweiten Stiftkopf, welcher an dem ersten Ende des zweiten länglichen Stiftes befestigt ist,
**dadurch gekennzeichnet,**
**dass** die Form der ersten und der zweiten nicht kreisförmigen Öffnung des ersten Abschlussteils (41) im Wesentlichen mit dem nicht kreisförmigen Abschnitt des ersten länglichen Stiftes beziehungsweise des zweiten länglichen Stiftes übereinstimmt, und dass der erste und der zweite Stiftkopf in einer Senkung (5a, 6a) in der ersten beziehungsweise der zweiten nicht kreisförmigen Öffnung des ersten Abschlussteils sitzen, wobei die Senkung nicht abgeschrägt ist.

2. Mehrfachverbindungsförderkette nach Anspruch 1, wobei sich das zweite Ende jedes länglichen Stiftes über eine zweite Kante der im Wesentlichen flachen horizontalen Oberfläche erstreckt und die Mehrfachverbindungsförderkette weiter umfasst:
ein zweites Abschlussteil (40), welches an der zweiten Kante der im Wesentlichen flachen horizontalen Oberfläche angeordnet ist, umfassend:
einen Hauptkörper, welcher einen im Wesentlichen trapezförmigen Abschnitt aufweist und eine erste nicht kreisförmige Öffnung und eine zweite nicht kreisförmige Öffnung definiert, wobei die Form der ersten und der zweiten nicht kreisförmigen Öffnung im Wesentlichen mit dem nicht kreisförmigen Abschnitt des ersten länglichen Stiftes beziehungsweise des zweiten länglichen Stiftes übereinstimmt und die Tiefe der ersten und der zweiten nicht kreisförmigen Öffnung ausreichend ist, um das zweite Ende des ersten länglichen Stiftes beziehungsweise des zweiten länglichen Stiftes zu umschließen; und
Mittel zum Zurückhalten des zweiten Endes des ersten länglichen Stiftes beziehungsweise des zweiten länglichen Stiftes in der ersten beziehungsweise der zweiten nicht kreisförmigen Öffnung.

3. Mehrfachverbindungsförderkette nach Anspruch 1 oder 2, wobei das erste Abschlussteil und das zweite Abschlussteil identisch sind.

4. Mehrfachverbindungsförderkette nach einem der vorhergehenden Ansprüche, umfassend: eine Mehrzahl von Abschlussteilen, wie sie in Anspruch 1 definiert sind, welche an den ersten und zweiten Kanten der im Wesentlichen flachen horizontalen Oberfläche derart angeordnet sind, dass sie das erste und das zweite Ende jedes der Mehrzahl der länglichen Teile umschließen.

5. Mehrfachverbindungsförderkette nach einem der vorhergehenden Ansprüche, wobei der im Wesentlichen trapezförmige Abschnitt des ersten Abschlussteils eine erste Seite (4) aufweist, welche im Wesentlichen parallel zu einer zweiten Seite (3) ist, wobei die zweite Seite (3) länger als die erste Seite (4) ist und abgerundete Ecken (3a, 3b) aufweist.

6. Mehrfachverbindungsförderkette nach Anspruch 5, wobei die erste Seite (4) abgerundete Ecken (4a, 4b) aufweist.

7. Mehrfachverbindungsförderkette nach einem der vorhergehenden Ansprüche, wobei das Abschlussteil derart ausgelegt und ausgestaltet ist, dass es eine maximale radiale Ausdehnung aufweist, welche kleiner oder gleich zu benachbarten Verbindungsplatten ist.

8. Mehrfachverbindungsförderkette nach einem der vorhergehenden Ansprüche, wobei der Hauptkörper der ersten (14a) und der zweiten Verbindung (14b) einer Verbindungsplatte (14) eine nicht kreisförmige Öffnung (30) definiert, deren Form nicht identisch mit dem nicht kreisförmigen Abschnitt des länglichen Stiftes übereinstimmt.

9. Mehrfachverbindungsförderkette nach einem der vorhergehenden Ansprüche, umfassend: eine Mehrzahl von länglichen Stiften, welche in einer im Wesentlichen parallelen Beziehung beabstandet sind, wobei ein erster länglicher Stift benachbart zu einem zweiten länglichen Stift ist, wobei der zweite längliche Stift benachbart zu einem dritten länglichen Stift ist, wobei jeder der länglichen Stifte ein erstes Ende, ein zweites Ende und einen nicht kreisförmigen Abschnitt aufweist, wobei die Mehrzahl der Verbindungsplatten aufeinander folgend in einer versetzten Weise entlang des ersten, des zweiten und des dritten länglichen Stiftes angebracht sind.

10. Mehrfachverbindungsförderkette nach einem der vorhergehenden Ansprüche, wobei das vom Umfang des Kettengrades abhängige Eingriffsteil sowohl der ersten als auch der zweiten Verbindung der Verbindungsplatte im Wesentlichen flachkantig.

11. Mehrfachverbindungsförderkette nach Anspruch 10, wobei sowohl die erste als auch die zweite Verbindung der Verbindungsplatte ein flachkantiges, im Wesentlichen tropfenförmiges Profil aufweist.

12. Mehrfachverbindungsförderkette nach einem der vorhergehenden Ansprüche, wobei der nicht kreisförmige Abschnitt des länglichen Stiftes im Wesentlichen elliptisch ist.

13. Mehrfachverbindungsförderkette nach einem der vorhergehenden Ansprüche, wobei die nicht kreisförmige Öffnung, welche durch den Hauptkörper der (oder jeder) Verbindung definiert ist, im Wesentlichen elliptisch oder oval mit einem vergrößerten Seitenabschnitt ist.

14. Mehrfachverbindungsförderkette nach Anspruch 13, wobei sich der vergrößerte Seitenabschnitt nach innen zu dem Verbindungsabschnitt hin erstreckt.

15. Mehrfachverbindungsförderkette nach einem der vorhergehenden Ansprüche, wobei die Verbindungsplatten aufeinander folgend entlang eines länglichen Stiftes angebracht und durch eine oder mehrere Unterlegscheiben beabstandet sind.

16. Mehrfachverbindungsförderkette nach Anspruch 15, wobei jede Unterlegscheibe einen Hauptkörper umfasst, welcher eine nicht kreisförmige Öffnung definiert, um den länglichen Stift aufzunehmen, deren Form im Wesentlichen mit dem nicht kreisförmigen Abschnitt des länglichen Stiftes übereinstimmt.

17. Mehrfachverbindungsförderkette nach Anspruch 16, wobei der Hauptkörper sowohl der ersten als auch der zweiten Verbindung der Verbindungsplatte eine nicht kreisförmige Öffnung definiert, deren Form nicht identisch mit dem nicht kreisförmigen Abschnitt des länglichen Stiftes übereinstimmt.

18. Mehrfachverbindungsförderkette nach Anspruch 16 oder 17, wobei die nicht kreisförmige Öffnung, welche durch den Hauptkörper der Unterlegscheibe definiert ist, ein identisches Gegenstück zu dem nicht kreisförmigen Abschnitt des länglichen Stiftes ist.

19. Mehrfachverbindungsförderkette nach einem der Ansprüche 15 bis 18, wobei die nicht kreisförmige Öffnung der Unterlegscheibe im Wesentlichen elliptisch oder oval ist.

20. Mehrfachverbindungsförderkette nach einem der Ansprüche 15 bis 19, wobei jede Unterlegscheiben umfasst: einen im Wesentlichen kreisförmigen Hauptkörper mit einer oder mehreren Umfangsunregelmäßigkeiten.

21. Mehrfachverbindungsförderkette nach Anspruch 20, wobei jede Umfangsunregelmäßigkeit sich von dem Umfang zu einer scharfen axialen Kante erstreckt.

22. Mehrfachverbindungsförderkette nach Anspruch 20 oder 21, wobei jede Umfangsunregelmäßigkeit eine im Wesentlichen dreieckige Erweiterung ist.

23. Mehrfachverbindungsförderkette nach einem der Ansprüche 20 bis 22, wobei die Unterlegscheibe eine Mehrzahl von Umfangsunregelmäßigkeiten aufweist.

24. Mehrfachverbindungsförderkette nach einem der Ansprüche 20 bis 23, wobei der im Wesentlichen kreisförmige Hauptkörper der Unterlegscheibe, welche eine oder mehrere Umfangsunregelmäßigkeiten aufweist, ein nicht kreisförmiges Profil annimmt.

25. Mehrfachverbindungsförderkette nach Anspruch 24, wobei das nicht kreisförmige Profil ein mehreckiges Profil ist.

26. Mehrfachverbindungsförderkette nach einem der Ansprüche 15 bis 25, wobei jede Unterlegscheibe aus einem vergütbaren legierten Stahl besteht, welcher eine Arbeitstemperatur von mehr als 350°C aufweist.

27. Abschlussteil, wie es in einem der vorhergehenden Ansprüche definiert ist.

28. Verfahren zum Herstellen einer Mehrfachverbindungsförderkette, wie sie in einem der Ansprüche 1 bis 26 definiert ist, welches die Schritte umfasst:
(A) Befestigen eines ersten Stiftkopfes an dem ersten Ende eines länglichen Stiftes;
(B) Einführen des zweiten Endes des länglichen Stiftes in die erste nicht kreisförmige Öffnung, welche durch den Hauptkörper des ersten Abschlussteiles definiert ist;
(C) Einführen des zweiten Endes des länglichen Stiftes in die nicht kreisförmige Öffnung, welche durch die erste oder durch die zweite Verbindung jeder der Mehrzahl von Verbindungsplatten definiert ist, zu einer Position, bei welcher der erste Stiftkopf in einer Senkung in der ersten nicht kreisförmigen Öffnung sitzt;
(D) Befestigen eines zweiten Stiftkopfes an dem zweiten Ende des länglichen Stiftes;
(E) Einführen des zweiten Endes des länglichen Stiftes in die erste nicht kreisförmige Öffnung, welche durch den Hauptkörper des zweiten Abschlussteiles definiert ist, zu einer Position, bei welcher das zweite Ende sich benachbart zu einer Senkung in der ersten nicht kreisförmigen Öffnung befindet; und
(F) exzentrisches Drehnieten eines Materialstücks auf dem zweiten Ende des länglichen Stiftes, um einen zweiten Stiftkopf herzustellen.

29. Verfahren nach Anspruch 28, wobei die Schritte (A) und (D) durch Drehnieten ausgeführt werden.

30. Verfahren nach Anspruch 28, wobei der Schritt (F) einen zweiten Stiftkopf herstellt, welcher in einer Senkung sitzt.

## Revendications

1. Chaîne de convoyeur (11) à maillons multiples adaptée à former une surface horizontale sensiblement plane (12) et pouvant être entraînée entre un premier poste de traitement et un second poste de traitement par engrènement avec une roue dentée d'entraînement, ladite chaîne de convoyeur à maillons multiples comprenant :
une pluralité d'axes allongés qui sont situés dans une disposition sensiblement parallèle et comprenant un premier axe allongé adjacent à un second axe allongé, chacun desdits axes allongés possédant une première extrémité, une seconde extrémité et une section non circulaire, dans lequel la première extrémité de chaque axe allongé s'étend au-delà d'un premier bord de la surface horizontale sensiblement plane;
une pluralité de plaques de liaison (14) montées sur des axes allongés adjacents et comprenant un premier organe de liaison (14a) relié à un second organe de liaison (14b) par une partie de raccordement (32), chacun des premier et second organes de liaison possédant un corps sensiblement principal et un élément (14c) qui engrène avec la roue dentée de manière circonférentielle, ledit corps principal définissant une ouverture non circulaire (30), dont la forme concorde essentiellement avec la section non circulaire d'un axe allongé;
un premier élément d'enveloppe (41) disposé au niveau du premier bord de la surface horizontale sensiblement plane comprenant :
un corps principal (2) possédant une section sensiblement trapézoïdale et définissant une première ouverture non circulaire (5) et une seconde ouverture non circulaire (6), dans lequel la forme des première et seconde ouvertures non circulaires concorde essentiellement avec la section non circulaire respectivement du premier axe allongé et du second axe allongé, et la profondeur des première et seconde ouvertures non circulaires est suffisante pour entourer la première extrémité respectivement du premier axe allongé et du second axe allongé; et
des moyens pour retenir la première extrémité du premier axe allongé et du second axe allongé respectivement dans les première et seconde ouvertures non circulaires, les moyens de retenue comprenant :
une première tête d'axe fixée à la première extrémité du premier axe allongé et une seconde tête d'axe fixée à la première extrémité du second axe allongé,
**caractérisée en ce que** la forme des première et seconde ouvertures non circulaires du premier élément d'enveloppe (41) concorde essentiellement avec la section non circulaire respectivement du premier axe allongé et du second axe allongé et **en ce que** lesdites première et seconde têtes des axes sont logées dans un contre-perçage (5a,6a) respectivement des première et seconde ouvertures non circulaires du premier élément d'enveloppe, le contre-perçage ayant une forme non rétrécie.

2. Chaîne de convoyeur à maillons multiples selon la revendication 1, dans laquelle la seconde extrémité de chaque axe allongé s'étend au-delà d'un second bord de la surface horizontale sensiblement plane, et la chaîne de convoyeur à maillons multiples comprend en outre :
un second élément d'enveloppe (40) positionné au niveau du second bord de la surface horizontale sensiblement plane, comprenant :
un corps principal possédant une section sensiblement trapézoïdale et définissant une première ouverture non circulaire et une seconde ouverture non circulaire, dans lequel la forme des première et seconde ouvertures non circulaires concorde sensiblement avec la section non circulaire respectivement du premier axe allongé et du second axe allongé et la profondeur des première et seconde ouvertures non circulaires est suffisante pour renfermer la seconde extrémité respectivement du premier axe allongé et du second axe allongé; et
des moyens pour retenir la seconde extrémité du premier axe allongé et du second axe allongé respectivement dans des première et seconde ouvertures non circulaires.

3. Chaîne de convoyeur à maillons multiples selon la revendication 1 ou 2, dans laquelle le premier élément d'enveloppe et le second élément d'enveloppe sont identiques.

4. Chaîne de convoyeur à maillons multiples selon l'une quelconque des revendications précédentes, comprenant : une pluralité d'éléments d'enveloppe tels que définis dans la revendication 1, positionnés au niveau des premier et second bords de la surface horizontale sensiblement plane de manière à renfermer lesdites première et seconde extrémités de chacun de la pluralité d'éléments allongés.

5. Chaîne de convoyeur à maillons multiples selon l'une quelconque des revendications précédentes, dans laquelle la section sensiblement trapézoïdale du premier élément d'enveloppe possède un premier côté (4) sensiblement parallèle au second côté (3), le second côté (3) étant plus long que le premier côté (4) et possédant des coins arrondis (3a,3b).

6. Chaîne de convoyeur à maillons multiples selon la revendication 5, dans laquelle le premier côté (4) possède des coins arrondis (4a,4b).

7. Chaîne de convoyeur à maillons multiples selon l'une quelconque des revendications précédentes, dans laquelle l'élément d'enveloppe est dimensionné et configuré de manière à posséder une étendue radiale maximale qui est égale ou inférieure à celle des plaques adjacentes de liaison.

8. Chaîne de convoyeur à maillons multiples selon l'une quelconque des revendications précédentes, dans laquelle le corps principal de chacun du premier organe de liaison (14a) et du second organe de liaison (14b) d'une plaque de liaison (14) définit une ouverture non circulaire (30) dont la forme ne correspond pas de façon identique à la section non circulaire de l'axe allongé.

9. Chaîne de convoyeur à maillons multiples selon l'une quelconque des revendications précédentes, comprenant : une pluralité d'axes allongés distants en étant dans une relation sensiblement parallèle, comprenant un premier axe allongé adjacent à un second axe allongé, dans lequel le second axe allongé est adjacent à un troisième axe allongé, chacun desdits axes allongés possédant une première extrémité, une seconde extrémité et une section non circulaire, et dans lequel une pluralité de plaques de liaison sont montées successivement d'une manière échelonnée le long des premier, second et troisième axes allongés.

10. Chaîne de convoyeur à maillons multiples selon l'une quelconque des revendications précédentes, dans laquelle l'élément, qui pend circonférentiellement et coopère avec une roue dentée, de chacun des premier et second éléments de liaison de la plaque de liaison a un bord sensiblement plat.

11. Chaîne de convoyeur à maillons multiples selon la revendication 10, dans laquelle chacun des premier et second éléments de liaison de la plaque de liaison possède un profil à bord plat, sensiblement en forme de larme.

12. Chaîne de convoyeur à maillons multiples selon l'une quelconque des revendications précédentes, dans laquelle la section non circulaire de l'axe allongé est sensiblement elliptique.

13. Chaîne de convoyeur à maillons multiples selon l'une quelconque des revendications précédentes, dans laquelle l'ouverture non circulaire définie par le corps principal du (de chaque) maillon est sensiblement elliptique ou ovale avec une partie latérale élargie.

14. Chaîne de convoyeur à maillons multiples selon la revendication 13, dans laquelle la partie latérale élargie s'étend vers l'intérieur en direction de la partie de raccordement.

15. Chaîne de convoyeur à maillons multiples selon l'une quelconque des revendications précédentes, dans laquelle les plaques de liaison sont montées successivement le long d'un axe allongé et sont séparées par une ou deux rondelles.

16. Chaîne de convoyeur à maillons multiples selon la revendication 15, dans laquelle chaque rondelle comporte un corps principal définissant une ouverture non circulaire servant à recevoir l'axe allongé, dont la forme concorde essentiellement avec la section non circulaire de l'axe allongé.

17. Chaîne de convoyeur à maillons multiples selon la revendication 16, dans laquelle le corps principal de chacun des premier et second éléments de liaison de la plaque de liaison définit une ouverture non circulaire, dont la forme ne concorde pas de façon identique avec la section non circulaire de l'axe allongé.

18. Chaîne de convoyeur à maillons multiples selon la revendication 16 ou 17, dans laquelle l'ouverture non circulaire définie par le corps principal de la rondelle concorde de façon identique avec la section non circulaire de l'axe allongé.

19. Chaîne de convoyeur à maillons multiples selon l'une quelconque des revendications 15 à 18, dans laquelle l'ouverture non circulaire de la rondelle est sensiblement elliptique ou ovale.

20. Chaîne de convoyeur à maillons multiples selon l'une quelconque des revendications 15 à 19, dans laquelle chaque rondelle comprend : un corps principal sensiblement circulaire possédant au moins une ou plusieurs irrégularités circonférentielles.

21. Chaîne de convoyeur à maillons multiples selon la revendication 20, dans laquelle chaque irrégularité circonférentielle s'étend depuis la circonférence en direction d'un bord axial acéré.

22. Chaîne de convoyeur à maillons multiples selon l'une ou l'autre des revendications 20 ou 21, dans laquelle chaque irrégularité circonférentielle est une extension de forme sensiblement triangulaire.

23. Chaîne de convoyeur à maillons multiples selon l'une quelconque des revendications 20 à 22, dans laquelle la rondelle possède une pluralité d'irrégularités circonférentielles.

24. Chaîne de convoyeur à maillons multiples selon l'une quelconque des revendications 20 à 23, dans laquelle le corps principal sensiblement circulaire de la rondelle a une ou plusieurs irrégularités circonférentielles possède un profil non circulaire.

25. Chaîne de convoyeur à maillons multiples selon la revendication 24, dans laquelle le profil non circulaire est un profil polygonal.

26. Chaîne de convoyeur à maillons multiples selon l'une quelconque des revendications 15 à 25, dans laquelle chaque rondelle est constituée par un acier allié pouvant être traité à chaud, qui possède une température de travail dépassant 350°C.

27. Elément d'enveloppe selon l'une quelconque des revendications précédentes.

28. Procédé pour fabriquer une chaîne de convoyeur à maillons multiples selon l'une quelconque des revendications 1 à 26, comprenant les étapes consistant à :
(A) fixer une première tête d'axe sur la première extrémité d'un axe allongé;
(B) insérer la seconde extrémité de l'axe allongé dans la première ouverture non circulaire définie par le corps principal du premier élément d'enveloppe;
(C) insérer la seconde extrémité de l'axe allongé dans l'ouverture non circulaire définie par le premier ou le second organe de liaison de chacun d'une pluralité de plaques de liaison dans une position dans laquelle la première tête d'axe est logée dans un contre-perçage formé dans la première ouverture non circulaire;
(D) fixer une seconde tête d'axe sur la seconde extrémité de l'axe allongé;
(E) insérer la seconde extrémité de l'axe allongé dans la première ouverture non circulaire définie par le corps principal du second élément d'enveloppe dans une position dans laquelle la seconde extrémité est adjacente à un contre-perçage dans la première ouverture non circulaire; et
(F) exécuter un rivetage, avec rotation excentrée, d'une pièce d'un matériau sur la seconde extrémité de l'axe allongé pour produire une seconde tête d'axe.

29. Procédé selon la revendication 28, selon lequel les étapes (A) et (D) sont exécutées au moyen d'un rivetage avec rotation.

30. Procédé selon la revendication 28, selon lequel l'étape (F) produit une seconde tête d'axe logée dans le contre-perçage.
